# EUROPÄISCHE PATENTSCHRIFT

(11) **EP 1 723 357 B1**
(45) Veröffentlichungstag und Bekanntmachung des Hinweises auf die Patenterteilung: **13.05.2009**
(21) Anmeldenummer: 05714985.8
(22) Anmeldetag: 17.02.2005
(51) Int. Cl.: F16K 3/26

(54) **STROMREGELVENTILVORRICHTUNG FÜR EINE PUMPE**
FLOW-CONTROL VALVE DEVICE FOR A PUMP
DISPOSITIF REGULATEUR DE DEBIT POUR UNE POMPE

(30) Priorität: 28.02.2004 DE 102004009829
(43) Veröffentlichungstag der Anmeldung: 22.11.2006
(73) Patentinhaber: ixetic Bad Homburg GmbH, 61352 Bad Homburg (DE)
(72) Erfinder: ABUMUSTAFA, Anwar, 64291 Darmstadt (DE)
(86) Internationale Anmeldenummer: PCT/DE2005/000270
(87) Internationale Veröffentlichungsnummer: WO 2005/083308

(56) Entgegenhaltungen:
- DE-A1- 19 915 319
- GB-A- 365 890

## Beschreibung

Die Erfindung betrifft eine Pumpe nach dem Oberbegriff des Anspruchs 1.

Derartige Pumpen sind bekannt, dabei weisen diese Pumpen aber ein Problem auf. Da beispielsweise bei Ansprechen der Druckbegrenzung der gesamte Pumpenförderstrom durch die axiale Einströmöffnung und die radialen Abströmöffnungen gefördert werden muss, muss die umlaufende Abströmnut zwischen dem Kolben und der Kolbenbohrung relativ tief sein. Das führt in dem Bereich der radialen Abströmöffnungen zu einem geringen Außendurchmesser des Kolbens, und das bedingt wiederum relativ kleine Durchmesser der radialen Abströmöffnungen, damit die zwischen den radialen Abströmöffnungen verbleibenden Stege stabil genug sind, um die am Kolben wirkenden Axialkräfte aufzunehmen.

Eine Pumpe gemäß der Stand der Technik ist aus DE19915319A bekannt.

Durch die relativ kleinen radialen Abströmöffnungen entstehen relativ hohe Strömungswiderstände, welche zu Druckverlusten und damit zu Aufladeverlusten im Ansaugbereich der Pumpe führen.

Es ist daher Aufgabe der Erfindung, eine Pumpe darzustellen, die diese Probleme nicht aufweist.

Die Aufgabe wird gelöst durch eine Pumpe, insbesondere Lenkhelfpumpe, mit einer Stromregelventilvorrichtung, wobei die Stromregelventilvorrichtung einen innnerhalb einer Kolbenbohrung verschieblich angeordneten Kolben aufweist und die Kolbenbohrung mindestens einen Einström- und mindestens einen Abströmkanal aufweist und der Kolben eine axiale Einströmöffnung und mehrere, im Wesentlichen radiale Abströmöffnungen und eine umlaufende Abströmnut zwischen einem ersten Bund und einem zweiten Bund, welcher eine Steuerkante für einen abströmenden Fluidstrom ausbildet, aufweist, wobei die axiale Einströmöffnung mindestens bis zum Beginn der radialen, seitlichen Abströmöffnungen im Wesentlichen zylindrisch verläuft und sich die umlaufende Abströmnut am äußeren Umfang des Kolbens in Richtung der Steuerkante in ihrer radialen Tiefe erweitert. Bevorzugt wird eine Pumpe, bei welcher sich die Abströmnut kolbenseitig mit einer leichten Kegelform erweitert und danach durch einen radial nach innen führenden Bogen im Steuerkantenbereich ihre größte Tiefe erreicht. Diese Merkmale bewirken in vorteilhafter Weise, dass die radialen seitlichen Abströmöffnungen in einem Kolbenbereich mit relativ großen Außendurchmesser angeordnet sein können und deshalb selbst in ihrem Durchmesser relativ groß ausfallen können, um dazwischen noch ausreichend stabile Stege zur Aufnahme der Axialkräfte zu ermöglichen, um dann im Bereich der Steuerkante in eine vertiefte Abströmnut überzugehen, die den gesamten ölstrom relativ verlustfrei zur Steuerkante führen kann.

Bevorzugt wird auch eine Pumpe, bei welcher sich die Durchmesser der radialen Abströmöffnungen von der axialen zylindrischen Einströmöffnung bis in den radial nach innen führenden Bogen im Steuerkantenbereich erstrecken. Das hat den Vorteil, dass die radialen Abströmöffnungen relativ groß und damit relativ widerstandsarm sind.

Weiterhin wird eine Pumpe bevorzugt, bei welcher der Kolben insgesamt drei Bunde aufweist. Das hat den Vorteil, dass der erste und der dritte Steg als so genannte Kolbenführungsstege den Kolben führen können, ohne einer Erosion durch abströmendes Fluid ausgesetzt zu sein, während der zweite Bund, welcher die Steuerkante des Ventilkolbens ausbildet, zwar einer gewissen Erosion durch die Strömung ausgesetzt sein kann, dafür aber nicht die Führungsaufgaben des ersten und dritten Bundes übernehmen muss.

Weiterhin wird ein Kolben bevorzugt, bei welchem die Bunde umlaufende Druckausgleichsnuten aufweisen. Das hat den Vorteil, dass auch bei einer unsymmetrischen Anlage des Kolbens in der Bohrung und dadurch unterschiedliche Druckverhältnisse am Kolbenumfang die Drücke sich über die Ausgleichsnuten kompensieren können und der Kolben sich dadurch nicht hydraulisch verklemmt.

Eine erfindungsgemäße Pumpe zeichnet sich dadurch aus, dass der Kolben ein Druckbegrenzungspilotventil enthalten kann. Das hat den Vorteil, dass das Pumpengehäuse eine separate Aufnahme für das Druckbegrenzungspilotventil nicht benötigt.

Die Erfindung wird nun anhand der Figuren beschrieben.

Figur 1 zeigt einen herkömmlichen Kolben.

Figur 2 zeigt einen erfindungsgemäßen Kolben.

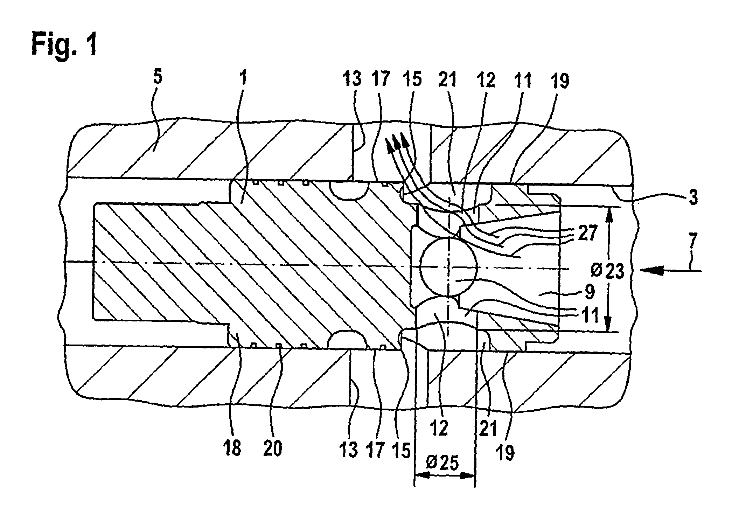

In Figur 1 ist ein Stromregelventilkolben 1 nach dem Stand der Technik dargestellt. Der Stromregelventilkolben 1 ist in einer Ventilbohrung 3 geführt, welche beispielsweise in das Pumpengehäuse 5 eingearbeitet sein kann. Ein von der Pumpe erzeugter Fluidstrom, hier durch einen Pfeil 7 dargestellt, strömt über die Ventilbohrung 3, welche hier auch einen Einströmkanal darstellt, in eine axiale Einströmöffnung 9 des Ventilkolbens 1. Die axiale Einströmöffnung 9 verengt sich kegelförmig in den Kolben hinein. Die axiale Einströmöffnung 9 mündet in vier radiale Abströmöffnungen 11, welche in ihren Zwischenräumen axiale Stege 12 ausbilden. Die Ventilbohrung 3 weist im Pumpengehäuse 5 weiterhin zwei radiale Abströmbohrungen 13 auf. Der Ventilkolben 1 ist in der Ventilbohrung 3 so positioniert, dass seine Steuerkante 15 die Abströmbohrungen 13 teilweise freigibt. Die Steuerkante 15 ist an einem Kolbenbund 17 ausgebildet. Der Ventilkolben 1 weist ferner zwischen dem Bund 17 mit der Steuerkante 15 und einem Führungsbund 19 eine umlaufende Abströmnut 21 auf. Die umlaufende Nut 21 muss eine gewisse radiale Tiefe aufweisen, um den gesamten Pumpenförderstrom in die Abströmkanäle 13 leiten zu können. Dadurch ergibt sich ein relativ geringer Durchmesser 23 des Kolbens im Bereich der umlaufenden Abströmnut 21, in welchem die vier radialen Abströmöffnungen 11 angeordnet sein müssen. Aufgrund des relativ geringen Durchmessers 23 sind daher die Abströmöffnungen 11 nur mit einem relativ geringen Durchmesser 25 herzustellen, damit die zwischen den Abströmöffnungen 11 verbleibenden Stege 12 die Axialkräfte, welche auf den Kolben wirken, aufnehmen können. Die relativ geringen Durchmesser 25 der Abströmöffnungen 11 erzeugen damit einen relativ hohen hydraulischen Widerstand, welcher zu Druckverlusten und damit zu Aufladeproblemen im Ansaugbereich der Pumpe führen kann. Man erkennt auch an den hilfsweise eingezeichneten Stromlinien 27, dass sich die Strömung durch die relativ engen Querschnitte der radialen Abflussöffnungen 11 pressen muss.

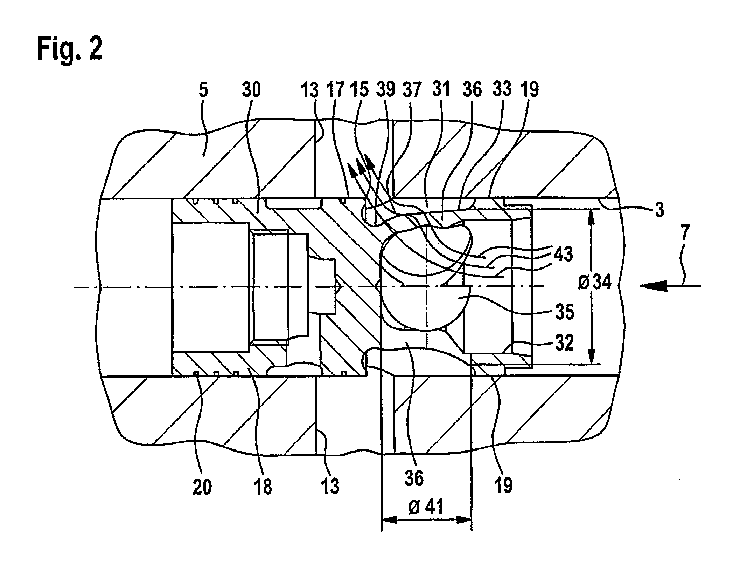

In Figur 2 ist ein erfindungsgemäßer Ventilkolben 30 dargestellt. Die in ihrer Struktur gleichen Merkmale wie in Figur 1, wie beispielsweise die Kolbenbohrung 3, das Pumpengehäuse 5, die Abströmbohrungen 13 im Pumpengehäuse, die Steuerkante 15 am mittleren Kolbenbund 17 sowie der Führungsbund 19 haben die gleichen Funktionen wie in Figur 1 und sind deswegen mit den gleichen Bezugszeichen versehen. Die Merkmale, die sich an dem erfindungsgemäßen Kolben gegenüber der Figur 1 verändert haben, sind mit neuen Bezugszeichen versehen. Der Kolben 30 weist eine zylindrische axiale Einströmöffnung 32 auf. Die umlaufende Abströmnut 31 hat gegenüber dem Stand der Technik eine völlig andere Nutform. Sie beginnt im Bereich 33 mit einer relativ geringen radialen Tiefe und setzt sich axial in einer leichten Kegelform in Richtung der Steuerkante 15 fort. Dadurch wird ein entschieden größerer Durchmesser 34 gegenüber dem Durchmesser 23 aus Figur 1 erreicht, wodurch bei Einbehaltung von hinreichend stabilen Stegen 36 die Durchmesser der Abströmöffnungen 35 entschieden größer ausfallen können als bei dem Stand der Technik. Um aber im Bereich der Steuerkante 15 eine hinreichende Tiefe der umlaufenden Abströmnut 31 zu erreichen, wird die Abströmnut in diesem Bereich durch einen radial nach innen führenden Bogen 37 bis hin zu ihrer größten Tiefe 39 erweitert. Durch diese Merkmale sind also bei hinreichend großer Tiefe der umlaufenden Abströmnut relativ große Durchmesser 41 der radialen Abströmöffnungen 35 erzielt, welche zu entschieden geringen Widerständen und damit zu entsprechend verlustfreieren Strömungen und zu einer besseren Aufladung der Pumpe führen. Man erkennt hier am Verlauf der Strömungsfäden 43, dass gerade im Bereich der radialen Abströmöffnungen 35 die Strömungsfäden weiter auseinander laufen können und damit die Strömung nicht so gepresst verläuft wie in der Figur 1. Durch die erfindungsgemäße Ausgestaltung des Ventilkolbens 30 ist in überraschender Weise erreicht worden, dass der Aufladedruck im Pumpenansaugbereich von etwa 0,2 bar auf 0,5 bar angehoben werden konnte und damit die Kavitationsgefahr der Pumpe entschieden verringert werden konnte.

Die Erfindung basiert also auf der Idee, dass zunächst so lange wie möglich der Außendurchmesser des Kolbens 30 in der umlaufenden Nut 31 groß bleibt, damit die radialen Abströmöffnungen 35 so groß wie möglich gestaltet werden können bei hinreichender Stegstärke. Erst kurz vor dem Steuerkantenbereich 15 wird dann die umlaufende Abströmnut 31 nach innen gezogen, da aber in diesem Bereich die Abströmöffnungen 35 schon wieder kleiner werden in ihrer sekantiellen Ausdehnung, ist eine hinreichende Stegbreite gesichert.

### Bezugszeichenliste

- 1: Stromregelventilkolben
- 3: Ventilbohrung
- 5: Pumpengehäuse
- 7: Fluidstrom
- 9: axiale Einströmöffnung
- 11: radiale Abströmöffnungen
- 12: axiale Stege
- 13: radiale Abströmbohrungen
- 15: Steuerkante
- 17: Kolbenbund mit Steuerkante
- 18: Führungskolbenbund
- 19: Führungskolbenbund
- 20: Druckausgleichsnuten
- 21: umlaufende Abströmnut
- 23: Kolbendurchmesser in der Abströmnut 21
- 25: Durchmesser der Abströmöffnungen 11
- 27: Stromlinien
- 30: erfindungsgemäßer Ventilkolben
- 31: umlaufende Abströmnut des Kolbens 30
- 33: kegelförmiger Bereich der Abströmnut
- 34: Kolbendurchmesser in der Abströmnut 31
- 35: radiale Abströmöffnungen
- 36: Stege
- 37: bogenförmiger Bereich der Abströmnut 31
- 39: größte Tiefe der Abströmnut 31
- 41: Durchmesser der Abströmöffnungen 35
- 32: zylindrische axiale Einströmöffnung des Kolbens 30
- 43: Strömungsfäden

## Patentansprüche

1. Pumpe, insbesondere Lenkhelfpumpe, mit einer Stromregelventilvorrichtung, wobei die Stromregelventilvorrichtung einen innerhalb einer Kolbenbohrung (3) verschieblich angeordneten Kolben (30) aufweist und die Kolbenbohrung (3) mindestens einen Einström- und mindestens einen Abströmkanal (13) aufweist und der Kolben eine axiale Einströmöffnung (32) und mehrere, im Wesentlichen radiale Abströmöffnungen (35) aufweist und die axiale Einströmöffnung (32) mindestens bis zum Beginn der radialen, seitlichen Abströmöffnungen (35) im Wesentlichen zylindrisch verläuft **dadurch gekennzeichnet, dass** die Stromregelventilvorrichtung ferner eine umlaufende Abströmnut (31) zwischen einem ersten Bund (19) und einem zweiten Bund (17), welcher eine Steuerkante (15) für einen abströmenden Fluidstrom ausbildet, aufweist, und wobei sich die umlaufende Abströmnut (31) am äußeren Umfang des Kolbens (30) in Richtung der Steuerkante (15) in ihrer radialen Tiefe erweitert.

2. Pumpe nach Anspruch 1, **dadurch gekennzeichnet, dass** sich die Abströmnut (31) kolbenseitig mit einer leichten Kegelform (33) erweitert und danach durch einen radial nach innen führenden Bogen (37) im Steuerkantenbereich ihre größte Tiefe erreicht.

3. Pumpe nach Anspruch 1 oder Anspruch 2, **dadurch gekennzeichnet, dass** sich die Durchmesser (41) der radialen Abströmöffnungen (35) von der axialen zylindrischen Einströmöffnung (32) bis in den radial nach Innen führenden Bogen (37) im Steuerkantenbereich erstrecken.

4. Pumpe nach Anspruch 1 bis Anspruch 3, **dadurch gekennzeichnet, dass** der Kolben (30) insgesamt drei Bunde (17, 18, 19) aufweist.

5. Pumpe nach Anspruch 1 bis Anspruch 4, **dadurch gekennzeichnet, dass** die Bunde (17, 18, 19) umlaufende Druckausgleichsnuten 20 aufweisen.

6. Pumpe nach Anspruch 1 bis Anspruch 5, **dadurch gekennzeichnet, dass** der Kolben (30) ein Druckbegrenzungspilotventil enthalten kann

## Claims

1. A pump, in particular a steering booster pump, having a flow-control device, where the flow-control device has a piston (30) situated movably in a piston bore (3) and the piston bore (3) has at least one influx and at least one efflux channel (13) and the piston has an axial influx opening (32) and a plurality of essentially radial efflux openings (35), and the axial influx opening (32) runs essentially cylindrically, at least to the beginning of the radial, lateral efflux opening (35), **characterized in that** the flow-control device also has an encircling efflux groove (31) between a first collar (19) and a second collar (17), which forms a control edge (15) for an escaping fluid stream, and where the radial depth of the encircling efflux groove (31) expands on the outer circumference of the piston (30) in the direction of the control edge (15).

2. The pump according to Claim 1, **characterized in that** the efflux groove (31) expands on the piston side with a slight conicity (33) and then reaches its greatest depth through an arc (37) that leads radially inward in the area of the control edge.

3. The pump according to Claim 1 or Claim 2, **characterized in that** the diameters (41) of the radial efflux openings (35) extend from the axial cylindrical influx opening (32) as far as the arc that leads radially inward (37) in the area of the control edge.

4. The pump according to Claim 1 through Claim 3, **characterized in that** the piston (30) has a total of three collars (17, 18, 19).

5. The pump according to Claim 1 through Claim 4, **characterized in that** the collars (17, 18, 19) have encircling pressure equalizing grooves 20.

6. The pump according to Claim 1 through Claim 5, **characterized in that** the piston (30) may contain a pressure limiting pilot valve.

## Revendications

1. Pompe, en particulier une pompe de servodirection, comportant un dispositif régulateur de débit, ledit dispositif régulateur de débit comportant un piston (30), disposé de manière mobile à l'intérieur d'un alésage (3) pour piston, et ledit alésage pour piston (3) comporte au moins un conduit d'admission et au moins un conduit d'évacuation (13), et le piston comporte un orifice d'admission axial (32) et plusieurs orifices d'évacuation (35) sensiblement radiaux, et l'orifice d'admission (32) axial s'étend avec une forme sensiblement cylindrique au moins jusqu'au début des orifices d'évacuation (35) latéraux radiaux, **caractérisée en ce que** le dispositif régulateur de débit comporte, en outre, une rainure d'évacuation (31) périphérique entre un premier collet (19) et un deuxième collet (17) qui forme un bord de commande (15) pour un flux de fluide sortant, et la rainure d'évacuation (31) périphérique, sur le pourtour extérieur du piston (30), s'élargissant dans sa profondeur radiale vers le bord de commande (15).

2. Pompe selon la revendication 1, **caractérisée en ce que** la rainure d'évacuation (31) s'élargit du côté piston avec une forme légèrement conique (33) et, ensuite, par l'intermédiaire d'une courbure (37) menant radialement vers l'intérieur, atteint sa plus grande profondeur dans la zone du bord de commande.

3. Pompe selon la revendication 1 ou 2, **caractérisée en ce que** les diamètres (41) des orifices d'évacuation (35) radiaux s'étendent depuis l'orifice d'admission (32) cylindrique axial jusque dans la courbure (37), menant radialement vers l'intérieur, dans la zone du bord de commande.

4. Pompe selon l'une quelconque des revendications 1 à 3, **caractérisée en ce que** le piston (30) comporte, au total, trois collets (17, 18, 19).

5. Pompe selon l'une quelconque des revendications 1 à 4, **caractérisée en ce que** les collets (17, 18, 19) comportent des rainures d'équilibrage de la pression (20) périphériques.

6. Pompe selon l'une quelconque des revendications 1 à 5, **caractérisée en ce que** le piston (30) peut contenir une vanne pilote de limitation de la pression.
